Europäisches Patentamt

European Patent Office

Office européen des brevets

(11) Veröffentlichungsnummer: **0 215 734 B1**

(12) **EUROPÄISCHE PATENTSCHRIFT**

(45) Veröffentlichungstag der Patentschrift: **04.04.90**

(21) Anmeldenummer: **86810367.2**

(22) Anmeldetag: **18.08.86**

(51) Int. Cl.⁵: **B 23 K 26/04**, G 01 B 11/27

(54) Verfahren und Vorrichtung zur Feinjustierung eines Laserstrahls.

(30) Priorität: **23.08.85 CH 3644/85**

(43) Veröffentlichungstag der Anmeldung:
**25.03.87 Patentblatt 87/13**

(45) Bekanntmachung des Hinweises auf die
Patenterteilung:
**04.04.90 Patentblatt 90/14**

(84) Benannte Vertragsstaaten:
**BE CH DE FR GB IT LI NL**

(56) Entgegenhaltungen:
EP-A-0 080 651
DE-B-2 559 925
FR-A-1 551 347

(73) Patentinhaber: **CIBA-GEIGY AG**
**Klybeckstrasse 141**
**CH-4002 Basel (CH)**

(72) Erfinder: **Kunz, Rino Ernst, Dr.**
**Im Schibler 18**
**CH-8162 Steinmaur (CH)**
Erfinder: **Junghans, Jürgen Rudolf, Dr.**
**Dorzenmatte 78**
**CH-3313 Büren z. Hof (CH)**
Erfinder: **Knus, Jean A.**
**Baslerstrasse 111**
**CH-8048 Zürich (CH)**
Erfinder: **Murbach, Urs**
**Hardstrasse 41**
**CH-5432 Neuenhof (CH)**
Erfinder: **Tuor, Marcel Franz**
**Oberdorfstrasse 17**
**CH-8153 Rümlang (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren und eine Vorrichtung zur Feinjustierung eines fokussierten Laserstrahls, insbesondere zur Kalibreirung der Strahl-Ablenkgeometrie in einer Laserbearbeitungsmaschine.

Die Einstellung und Feinjustierung der Strahl-Ablenkgeometrie in Laserbearbeitungsmaschinen ist eine relativ mühsame und aufwendige Angelegenheit. Im allgemeinen wird dazu mit dem Laserstrahl in ein Werkstück ein Testmuster graviert, dieses vermessen, die Parametereinstellung entsprechend korrigiert und das Ganze dann u.U. mehrfach wiederholt, bis das gravierte Testmuster hinreichend genau mit dem Idealmuster übereinstimmt.

Zur Einstellung der Ablenkgeometrie bei elektronischen Abtastsystemen wird u.a. auch so vorgegangen, dass in der Bildebene ein definiertes Eich-Muster angeordnet wird, die einzelnen Punkte dieses Musters, deren Koordinaten bekannt sind, mit dem projizierten Abtast-Strahl "abgefahren" werden, und die dazu notwendigen Ablenkdaten des Strahls den betreffenden Koordinaten zugeordnet werden. Auf diese Weise ist eine automatische Kalibrierung des Systems möglich.

Eine solche automatische Kalibrierung oder Feineinstellung wäre auch für Laserbearbeitungsmaschinen von Vorteil und wünschbar, ist aber bis jetzt aus dem evidenten Grund nicht realisierbar, dass bei Laserbearbeitungsmaschinen in der Bildebene (Fokusebene) eine Bearbeitung des Materials erfolgt und somit dort kein Eich-Muster angebracht werden kann. Andererseits ist auch eine wesentliche Herabsetzung der Laserleistung (Dämpfung des Laserstrahls) während der Kalibrierung nicht zweckmässig, weil dann der Strahl nicht mehr repräsentativ für die späteren tatsächlichen Betriebsverhältnisse wäre. Bei geringerer Strahlleistung können sich die Strahlparameter ändern, ausserdem können Fehler in der Ablenkgeometrie durch Wärmeeffekte auftreten. Es ist deshalb wichtig, die Kalibrierung unter möglichst praxisnahen, d.h. den tatsächlichen Betriebsverhältnissen entsprechenden Bedingungen vornehmen zu können. Herkömmliche Methoden, die Spalten, Löcher, Messerschneiden oder dergleichen als Testmuster-Bestandteile verwenden, sind hier wegen der bei voller Strahlleistung unvermeidlichen Materialbearbeitung völlig ungeeignet.

Zum Stand der Technik sind US—A—4 539 481 (≙ EP—A—1—080 651), US—A—3 485 996 (≙ FR—A—1 551 347) und DE—B2—2 559 925 bekannt.

US—A—4 539 481 zeigt ein Verfahren zum Justieren des Bezugssystems eines Laserbearbeitungsgeräts. Dabei wird der Rand der Werkstücks bei jeder Suchbewegung des im Dauerstrich betriebenen Lasers überfahren und daraus die Position des Werkstücks relativ zum Bezugssystem ermittelt und danach das Bezugssystem entsprechend korrigiert. Bei diesem Verfahren findet somit eine Werkstück-Positionierung, nicht aber eine Korrektur bzw. Justierung der Strahlgeometrie und -parameter statt.

US—A—3 485 996 zeigt ein Laserschweissgerät, bei dem das Werkstück mit einer Hilfslichtquelle abgetastet wird. Sobald durch diese Abtastung die Stelle, an der eine Schweissung vorgenommen werden soll, entdeckt wird, wird der Laserstrahl getriggert.

DE—A—2 559 925 zeigt eine Einrichtung zur zentrischen Justierung eines Laserstrahls auf die optische Achse eines Mikroskopobjektivs. Dabei wird ein separater Justierlaser und ein zur Fokussieroptik zentriertes Fadenkreuz verwendet, um den Laserstrahl auf die optische Achse zu zentrieren. Beobachtet wird die Beugung des Justierlaserstrahls am Fadenkreuz.

Durch die Erfindung sollen nun ein Verfahren und ein Hilfsmittel geschaffen werden, welche eine einfache und automatisierbare Feineinstellung (Kalibrierung) eines fokussierten Laserstrahls bei voller Strahlleistung ermöglichen.

Die erfindungsgemässe Vorrichtung und das erfindungsgemässe Verfahren, die diese Aufgabe erfüllen, sind in den Patentansprüchen 1 und 15 beschreiben. Besonders vorteilhafte und zweckmässige Ausgestaltungen und Weiterbildungen ergeben sich aus den abhängigen Ansprüchen.

Das Grundprinzip der Erfindung besteht also darin, in der Fokus-Ebene des Laserstrahls ein nicht absorbierendes Substrat und auf diesem Marken anzubringen, welche ebenfalls kaum absorbieren und nur eine Ablenkung eines Bruchteils des sie beaufschlagenden Laserlichts bewirken, das dann von geeigneten Sensoren aufgefangen werden kann. Auf diese Weise kann es auch bei voller Intensität des Laserstrahls nicht zu einer unerwünschten Bearbeitung des Materials in der Fokusebene kommen, und die Kalibrierung kann daher unter praxisgerechten Betriebsbedingungen erfolgen.

Die erfindungsgemässe Vorrichtung ist hauptsächlich und in erster Linie für die Einstellung der Strahl-Ablenkgeometrie bestimmt. Sie kann aber auch für die Fokus-Einstellung benutzt werden sowie auch für die Ueberprüfung der Strahlqualität, u.s.w.

Im folgenden wird die Erfindung anhand der Zeichnung näher erläutert. Es zeigen:

Fig. 1 einen Schnitt nach der Linie I—I der Fig. 2 durch ein Ausfürhungsbeispiel einer erfindungsgemässen Vorrichtung,

Fig. 2 eine Draufsicht auf die Vorrichtung der Fig. 1,

Fig. 3 eine Detailskizze zur Erläuterung des Funktionsprinzips,

Fig. 4 ein Prinzip-Schaltschema des elektronischen Teils der Vorrichtung, und

Fig. 5a—13f Detailvarianten.

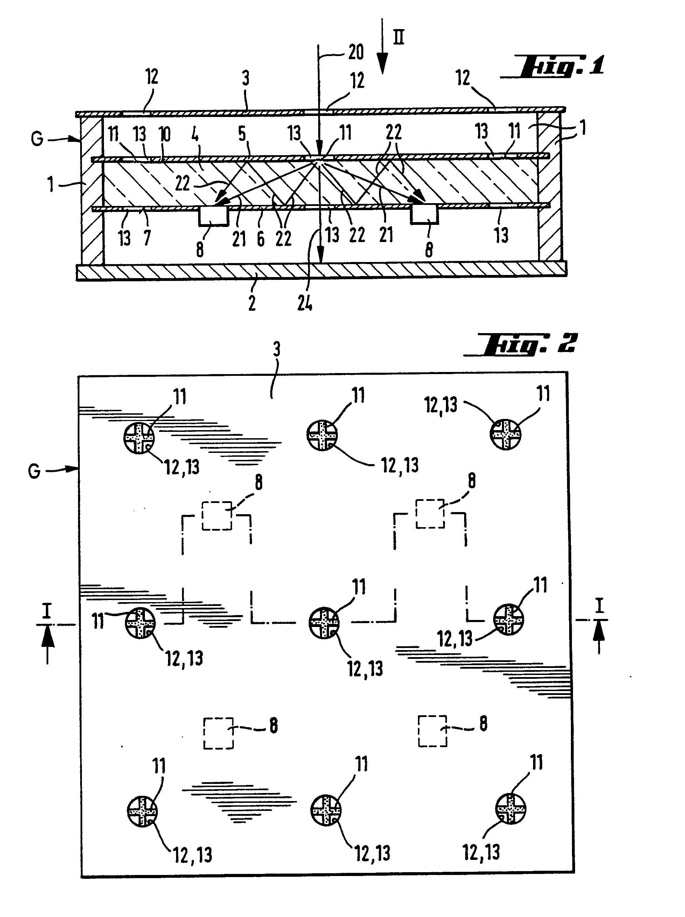

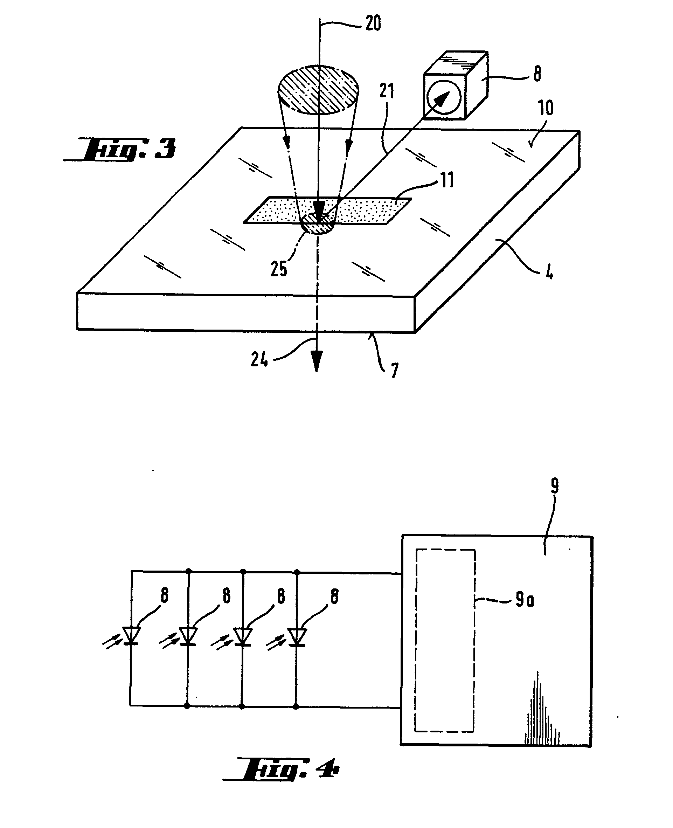

Gemäss Fig. 1 umfasst die Vorrichtung ein quadrisches Gehäuse G mit vier Seitenwänden 1, einem Boden 2 und einem Deckel 3. Im Gehäuse ist etwa in der Mitte zwischen Boden und Deckel parallel zu diesen eine planparallele transparente Platte 4 angeordnet. Zu beiden Seiten der Platte befindet sich je eine Lochmaske 5 und 6, und an der Unterseite 7 der Platte 4 sind vier Laserdetektoren (fotoelektrische Wandler) 8 befestigt, welche über nicht gezeigte Leitungen mit einer Elektronikschaltung 9 (Fig. 4) zur Signalauswertung verbunden sind. Auf der Oberseite 10 der transparenten Platte 4 sind lichtstreuende, hier kreuzförmig ausgebildete Marken 11 angeordnet. Der Deckel 3 ist als Lochblende ausgebildet, die Blendenlöcher 12 des Deckels 3 und die Löcher 13 der beiden Lochmasken 5 und 6 liegen jeweils in Richtung des einfallenden Laserstrahls über bzw. unter jeweils einer Marke 11. Auf diese Weise kann nur der unmittelbare Umgebungsbereich jeder Marke 11 mit Laserlicht beaufschlagt werden.

Im praktischen Einsatz wird die Vorrichtung so in den Strahlengang der Laserbearbeitungsmaschine eingesetzt, dass die die Marken 11 tragende Oberfläche 10 der transparenten Platte 4 in die Fokus-Ebene des Laserstrahls 20 zu liegen kommt. Der als Lochblende wirkende Deckel 3 der Vorrichtung liegt dann soweit oberhalb der Fokus-Ebene, dass dort keine Bearbeitung des Materials stattfindet.

Für den Justiervorgang wird nun der Laserstrahl 20 über die einzelnen Marken 11 geführt. Wo keine Marken 11 vorhanden sind, also innerhalb der von den Blendenlöchern 12 und 13 definierten Umgebungsbereiche der Marken, tritt der Laserstrahl 20 ungehindert durch die transparente Platte 4 hindurch und trifft auf den als Absorber (Strahlen-Senke) ausgebildeten bzw. wirkenden Boden 2 des Gehäuses G. Da sich dieser weit im Abstand von der Fokus-Ebene befindet, findet auch hier keine Bearbeitung, sondern lediglich eine Erwärmung des Materials statt. Deise Erwärmung ist jedoch nicht wesentlich und kann erforderlichenfalls durch geeignete Kühlmassnahmen auch einfach in Grenzen gehalten werden.

Wenn der Laserstrahl 20 auf eine Markierung 11 trifft, wird ein kleiner Bruchteil des auftreffenden Lichts abgelenkt und gelangt dann direkt oder durch Mehrfachreflexion an den beiden Oberflächen 7 und 10 der Platte 4 (Strahlen 21 und 22 in Fig. 1) zu den Laserdetektoren 8, welche dann ein entsprechendes elektrisches Signal an die Auswertelektronik 9 abgeben. Das von den Markierungen 11 abgelenkte Licht ist so schwach, dass die Laserdetektoren 8 nicht beschädigt werden.

Die Kalibrierung der Strahlablenkgeometrie kann nun in konventioneller Weise automatisch durch Abtastung der einzelnen Marken 11 und Zuordnung der dazu notwendigen Ablenkdaten zu den bekannten Positionen der Marken erfolgen. Dieser Prozess ist zwar wegen der vielen, teilweise gegenseitig abhängigen Parameter ziemlich komplex, aber an sich Stand der Technik.

In Fig. 3 ist das der Erfindung zugrundeliegende Prinzip nochmals verdeutlicht. Der fokussierte Laserstrahl 20 beaufschlagt die in der Fokus-Ebene liegende Oberfläche 10 des transparenten, hier plattenförmigen Substrats 4 und erzeugt dort einen Brennfleck 25 relativ geringen Durchmessers. Ein Teil des Laserstrahls 20 beaufschlagt die hier balkenförmige Marke 11. Diese lenkt wiederum einen Bruchteil des sie beaufschlagenden Lichts auf den Laserdetektor 8 um, der dann ein entsprechendes elektrisches Signal erzeugt. Der umgelenkte Lichtanteil ist mit 21 bezeichnet, der durch das Substrat 4 unabgelenkt hindurchgehende mit 24.

Substrat und Marken können verschieden gestaltet sein. Wesentlich für das Substrat ist, dass es bezüglich des verwendeten Laserlichts eine möglichst niedrige Absorption aufweist. Es muss also transparent oder spiegelnd sein. Aus praktischen Gründen ist ein transparentes Substrat besser geeignet. Die Marken dürfen ebenfalls nicht wesentlich absorbieren, da sonst eine unerwünschte Bearbeitung des Materials durch den fokussierten Laserstrahl unvermeidlich wäre. Die Marken müssen einen Teil des sie beaufschlagenden Lichts irgendwie umlenken, sodass es von den Laserdetektoren empfangen werden kann. Diese Umlenkung kann auf verschiedene Weise erfolgen, z.B. durch Streuung, Brechung, Beugung oder gerichtete Reflexion. Streuung wird aus praktischen Gründen bevorzugt.

Die Anzahl und Form der Marken sowie ihre Anordnung richten sich nach der Art und Genauigkeit der durchzuführenden Kalibrierung. Für viele Fälle ist zum Beispiel eine Anordnung gemäss Fig. 2 mit neun Marken geeignet. Im Prinzip genügt ein einziger Laserdetektor, mit Vorzug werden aber mehrere Detektoren vorgesehen. Dabei werden diese vorzugsweise etwa gemäss Fig. 2 so angeordnet, dass sich für alle Detektoren zusammen insgesamt für alle Marken etwa dieselbe Empfindlichkeit ergibt. Mit anderen Worten, wenn die Ausgangssignale aller Detektoren zusammengefasst werden, so soll das Summensignal für alle beaufschlagten Marken gleich sein.

In Fig. 4 ist der elektrische Teil der Vorrichtung dargestellt. Die vier Laserdetektoren 8 (z.B. Silicium-Fotodioden mit vorgeschaltetem Filter) sind parallel geschaltet und speisen eine Auswerteschaltung 9, die die Detektorsignale zunächst einmal aufbereitet (Teil 9a) und dann zur Kalibrierung der Laserbearbeitungsmaschine auswertet. Ueblicherweise wird die Auswerteschaltung als Ganzes oder wenigstens mit Ausnahme ihres für die unmittelbare Signalaufbereitung zuständigen Teils 9a Bestandteil der elektronischen Steuerung der Laserbearbeitungsmaschine sein.

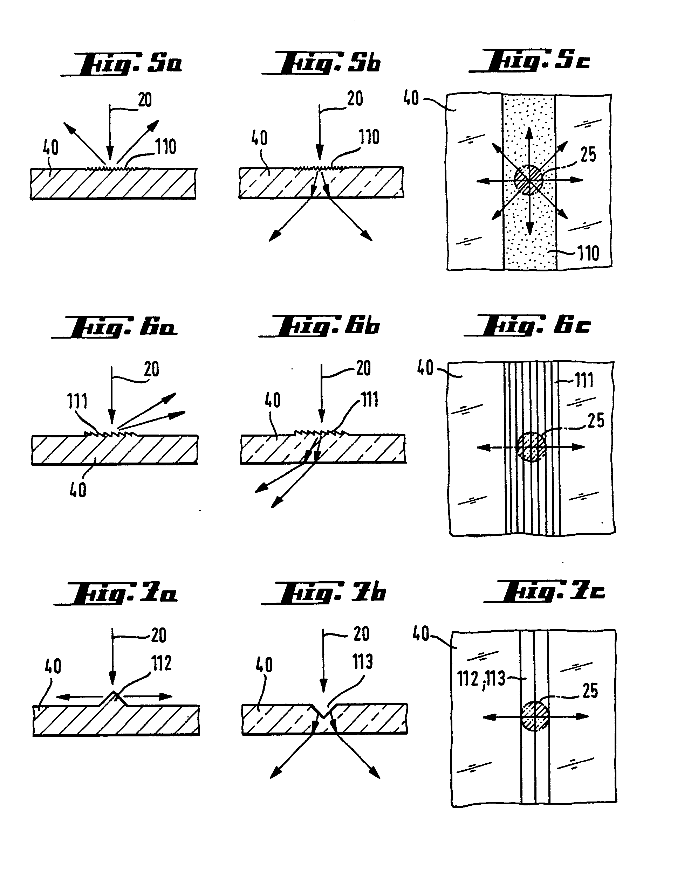

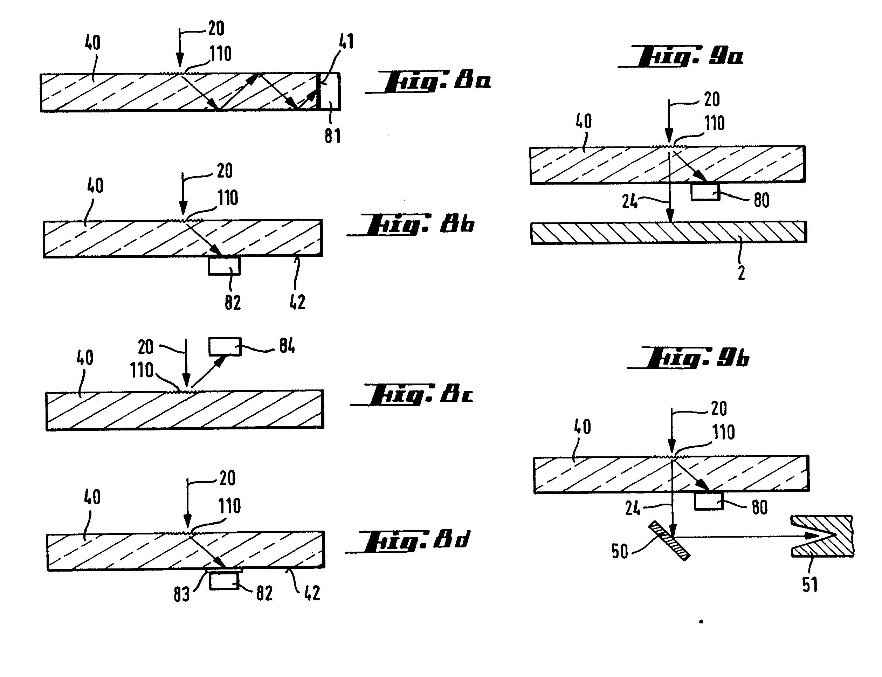

Die Figuren 5a—c, 6a—c und 7a—c zeigen verschiedene Ausbildungsmöglichkeiten von Marken und Substrat. In Fig. 5a, 6a und 7a ist das Substrat 40 jeweils reflektierend, in Fig. 5b, 6b und 7b jeweils transparent. In Fig. 5a und 5b bestehen die Marken 110 in einer lokalen, z.B. durch Aetzung erzielten Aufrauhung der Substratoberfläche und wirken streuend. In Fig. 6a und 6b bestehen die Marken in einer Riffelung (Gitterstruktur) 111, welche eine Beugung des Lichts bewirkt. In Fig. 7a und 7b schliesslich werden die Marken durch eine erhabene bzw. konkave Facette 112 bzw. 113 gebildet, die eine gerichtete Spiegelung bzw. Brechung und dadurch Umlenkung des Lichts bewirkt. In den fig. 5c—7c sind jeweils die Draufsichten auf die Anordnungen der fig. 5a,b, 6a,b und 7a,b dargestellt.

Die Figuren 8a—8d zeigen verschiedene Möglichkeiten der Anordnung der Laserdetektoren. In Fig. 8a befindet sich der Detektor 81 an einer Stirnseite 41 des transparenten Substrats 40. Von der Marke 110 gestreutes Licht erreicht den Detektor durch Mehrfachreflexion an den Substrat-Oberflächen.

In Fig. 8b ist der Detektor 82 direkt an der Unterseite 42 des transparenten Substrats 40 angeordnet. In Fig. 8d ebenfalls, aber unter Zwischenlage einer auf die Wellenlänge des verwendeten Laserlichts abgestimmten Filterscheibe 83.

In Fig. 8c ist das Substrat 40 spiegelnd, der Detektor 84 befindet sich oberhalb des Substrats.

Die Fig. 9a und 9b zeigen zwei Möglichkeiten, das nicht auf die Laserdetektoren 80 umgelenkte Laserlicht zu absorbieren. In Fig. 9a trifft das vom Substrat 40 durchgelassene Licht auf eine gegebenenfalls gekühlte Absorber-Platte 2 analog Fig. 1. In Fig. 9b wird das Licht mittels eines Spiegels 50 umgelenkt und auf eine eigene Strahlen-Senke 51 geführt. Selbstverständlich sind auch noch andere Varianten denkbar und möglich.

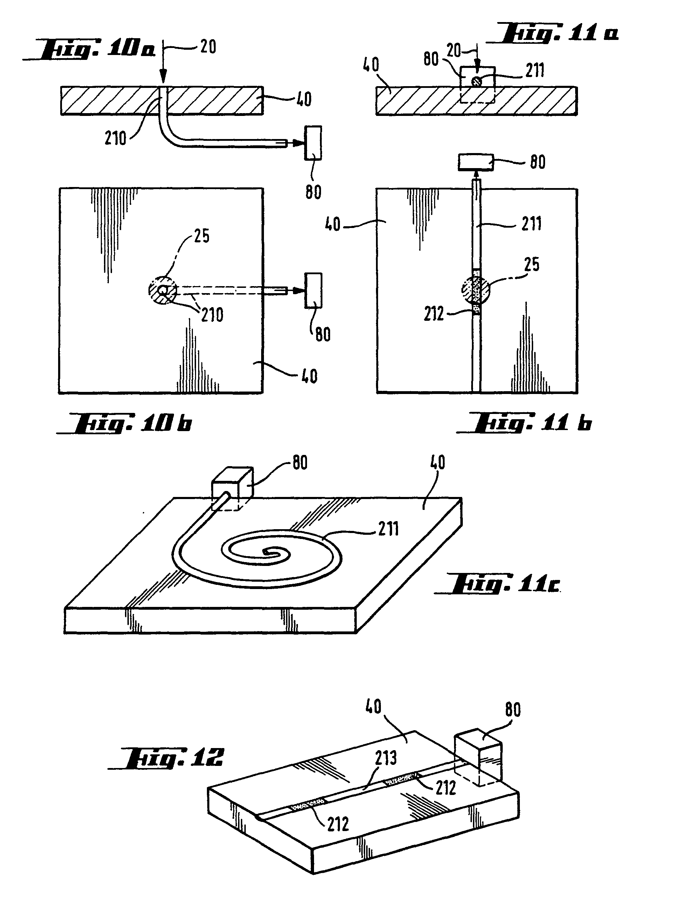

Die Figuren 10a,b, 11a,b,c und 12 zeigen weitere Möglichkeiten, wie Marken mit den erfindungsgemässen Eigenschaften praktisch realisiert werden können. In Fig. 10a und 10b ist dazu in das transparente oder spiegelnde Substrat ein Lichtleiter 210 eingesetzt, der mit seinem anderen Ende zum Laserdetektor 80 führt. Fig. 10b zeigt die Grössenverhältnisse von Lichtleiterdurchmesser und Brennfleck 25 des Laserstrahls.

In Fig. 11a—c liegt ein Lichtleiter 211 auf dem Substrat 40. Seine Oberfläche ist lokal aufgerauht. Wenn ein Laserstrahl diese aufgerauhte Zone 212 beaufschalgt, drinkt Licht in den Leiter 211 ein und wird zum Laserdetektor 80 geleitet. Beim Beispiel nach Fig. 11c liegt der Lichtleiter 211 auf dem Substrat 40, jedoch verläuft er hier nicht linear, sondern hat die Form einer Spirale. Auf diese Weise kann mittels eines einzigen Lichtleiters die gesamte Substrat-Fläche erfasst werden.

Fig. 12 zeigt einen Lichtleiter 213, der direkt im Substratmaterial (z.B. durch Duffusionsverfahren) erzeugt wurde (Aenderung der Brechzahl des Substratmaterials).

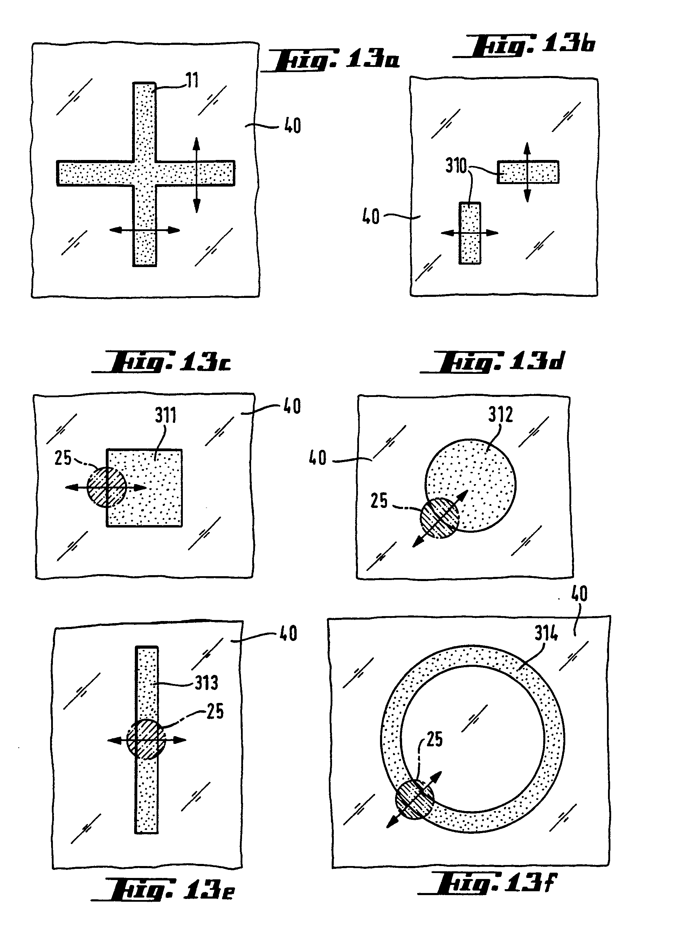

Die Figuren 13a—f schliesslich zeigen verschiedene Gestalten von Marken 11 und 310—314. Von Bedeutung ist, dass die Marken möglichst scharfkantig sind. Ferner ist es vorteilhaft, wenn die Marken so gross ausgestaltet sind, dass der ganze Brennfleck auf der Markenfläche Platz hat. Dann hängt das maximale Detektorsignal nicht vom Durchmesser des Brennflecks ab, was messtechnische Vorteile (fixe Detektor-Dynamik) hat. Bei einem Brennfleckdurchmesser von 50—200 µ haben sich beispielsweise Markenbreiten von ca. 800 µ gut bewährt. Ausserdem lassen sich breitere Marken scharfkantiger ätzen als extrem dünne Marken.

Die Dicke des transparenten Substrats hängt von der Detektoranordnung, von der Streucharakteristik der Marken und von den optischen Daten des beaufschlagenden Laserstrahls ab. Ein Wert von ca. 8—12 mm ist beispielsweise geeignet. Die Lochmasken 5 und 6 und die Lochblende 3 schirmen parasitäres Streulicht ab.

Die erfindungsgemässe Vorrichtung kann auch mittels Technologien aus dem Gebiet der sog. Integrierten Optik realisiert werden, wobei dann das Substrat, die Marken und die Laserdetektoren als eine einzige integriert-optische Schaltung ausgeführt wäre.

**Patentansprüche**

1. Vorrichtung zur Feinjustierung eines fokussierten Laserstrahls, insbesondere zur Kalibrierung der Strahl-Ablenkgeometrie, gekennzeichnet durch
— ein in der Fokusebene des Laserstrahls (20) anzuordnendes, ebenes und im wesentlichen transparentes und/oder spiegelndes Substrat (4, 40),
— eine Anzahl von auf dem Substrat (4, 40) in der Fokusebene angeordneten, Laserlicht streuenden, brechenden, beugenden oder anderswie ablenkenden Marken (11, 110, 111, 112, 113, 212, 310 311, 312, 313, 314), und
— eine fotoelektrische Einrichtung zum selektiven Empfang des von den Marken gestreuten, gebeugten, gebrochenen oder sonstwie abgelenkten Laserlichts (21, 22) und zur Umsetzung desselben in elektrische Signale.

2. Vorrichtung nach Anspruch 1, gekennzeichnet durch eine an die fotoelektrische Einrichtung angeschlossene elektronische Auswerteeinrichtung (9, 9a) für die elektrischen Signale.

3. Vorrichtung nach Anspruch 1, dadurch gekennzeichnet, dass das Substrat (4, 40) im wesentlichen für das betreffende Laserlicht (20) transparent ist und dass die fotoelektrische Empfangseinrichtung auf der der Laserquelle abgewandten Substratseite (7, 42) angeordnet ist.

4. Vorrichtung nach einem der Ansprüche 1—3, dadurch gekennzeichnet, dass laserquellenseitig im Abstand zum Substrat (4, 40) eine Lochblende (3) vorgesehen ist, welche im wesentlichen alles nicht die unmittelbare Umgebung der Marken beaufschlagende Laserlicht ausblendet.

5. Vorrichtung nach einem der Ansprüche 1—4, dadurch gekennzeichnet, dass eine Strahlensenke (2, 51) für das vom Substrat (4, 40) im Umgebungsbereich der Marken reflektierte oder transmittierte Laserlicht vorgesehen ist.

6. Vorrichtung nach einem der Ansprüche 1—5, dadurch gekennzeichnet, dass auf oder nahe der vom Laserlicht (20) beaufschlagten Oberfläche (10) des Substrats (4, 40) eine nur im unmittelbaren Umgebungsbereich der Marken ausgesparte Lochmaske (5) vorgesehen ist.

7. Vorrichtung nach einem der Ansprüche 1—6, dadurch gekennzeichnet, dass das Substrat (4, 40) eine transparente Platte ist und auf beiden Seiten mit einer Lochmaske (5, 6) versehen ist.

8. Vorrichtung nach einem der Ansprüche 1—7, dadurch gekennzeichnet, dass das Substrat (4, 40) eine transparente Platte ist, und dass ein Laserdetektor (80, 82) der fotoelektrischen Empfangseinrichtung unmittelbar oder unter Zwischenlage eines Filters (83), an der der Laserquelle abgewandten Oberfläche (7, 42) der Platte befestigt ist.

9. Vorrichtung nach Anspruch 7, dadurch gekennzeichnet, dass die Lochmasken (5, 5) so ausgebildet sind, dass von den Marken nicht abgelenktes Laserlicht (24) im wesentlichen unbehindert durch die Kombination Lochmaske-Substrat-Lochmaske hindurchtreten kann.

10. Vorrichtung nach den Ansprüche 5—7, dadurch gekennzeichnet, dass sie als im wesentlichen geschlossenes Gehäuse (G) ausgebildet ist, wobei der Boden des Gehäuses (G) durch den Abnsorber (2) und der Deckel durch die Lochblende (3) gebildet ist und das Substrat (4, 40) parallel im Abstand zwischen Boden und Deckel montiert ist.

11. Vorrichtung nach einem der Ansprüche 1—10, dadurch gekennzeichnet, dass die Marken (11, 110, 111, 112, 113, 212, 310, 311, 312, 313, 314) als das Laserlicht streuend ausgebildet sind.

12. Vorrichtung nach einem der Ansprüche 1—11, dadurch gekennzeichnet, dass der oder die Laserdetektor(en) (8, 80, 81, 82, 84) der fotoelektrischen Empfangseinrichtung so angeordnet ist bzw. sind, dass sie im wesentlichen nur das von den Marken gestreute, gebrochene, gebeugte oder sonstwie abgelenkte Laserlicht (21, 22) empfangen.

13. Vorrichtung nach einem der Ansprüche 1—12, dadurch gekennzeichnet, dass die fotoelektrische Empfangseinrichtung mehrere Laserdetektoren (8, 80, 81, 82, 84) umfasst, die so angeordnet sind, dass sie insgesamt von jeder Marke etwa gleich viel Licht empfangen.

14. Vorrichtung nach einem der Ansprüche 1—13, dadurch gekennzeichnet, dass die Marken (11, 110, 111, 112, 113, 212, 310, 311, 312, 313, 314) eine möglichst scharfkantige Begrenzung und in wenigstens einer, vorzugsweise beiden Dimensionen eine grössere Audehnung als der das Substrat (4, 40) bzw. die darauf befindlichen Marken beaufschlagende Laserstrahl (20) aufweisen.

15. Verfahren zur Feinjustierung eines fokussierten Laserstrahls, dadurch gekennzeichnet, dass man in der Fokusebene ein im wesentlichen transparentes und/oder spiegelndes Substrat (4, 40) anordnet, auf dem nicht absorbierende, einen Teil des beaufschlagenden Lichts (20) durch Streuung, Beugung, Brechung oder anderswie umlenkende Marken (11, 110, 111, 112, 113, 212, 310, 311, 312, 313, 314) angeordnet sind, und dass man die Marken mit dem Laserstrahl beaufschlagt und das dabei von den Marken umgelenkte Licht (21, 22) mittels eines Detektors (8, 80, 81, 82, 84) auffängt und die von diesem erzeugten Signale zur Justierung auswertet.

## Revendications

1. Dispositif pour l'ajustement fin d'un rayon laser focalisé, en particulier en vue du calibrage de la géométrie de déviation du rayon, dispositif caractérisé par
— un substrat (4, 40) plan et sensiblement transparent et/ou réfléchissant, qu'il faut disposer dans le plan focal du rayon laser (20),
— un dertain nombre de marques (11, 110, 111, 112, 113, 212, 310, 311, 312, 313, 314) disposées sur le substrat (4, 40) dans le plan focal, qui dispersent, réfractent, diffractent ou dévient d'une quelconque autre façon la lumière laser,
— et un dispositif photo-électrique, destiné à la réception sélective de la lumière laser (21, 22) dispersée, diffractée, réfractée, ou déviée d'une quelconque autre façon par les marques, et à la transformation de cette lumière en des signaux électriques.

2. Dispositif selon la revendication 1, caractérisé par un dispositif électronique (9, 9a) d'exploitation des signaux électriques et rattaché au dispositif photoélectrique.

3. Dispositif selon la revendication 1, caractérisé en ce que le substrat (4, 40) est sensiblement transparent pour la lumière laser (20) concernée et en ce que le dispositif récepteur photo-électrique est disposé sur la face (7, 42) du substrat située à l'opposé de la source laser.

4. Dispositif selon l'une des revendications 1 à 3, caractérisé en ce que l'on prévoit du côté de la source laser, et placé à une certaine distance du substrat (4, 40), un écran (3) à trous qui occulte sensiblement toute la lumière laser qui ne frappe pas l'environnement immédiat des marques.

5. Dispositif selon l'une des revendications 1 à 4, caractérisé en ce que l'on prévoit une trappe (2, 51) destinée à absorber les rayons de la lumière laser, réfléchie ou transmise par le substrat (4, 40) dans la zone entourant les marques.

6. Dispositif selon l'une des revendications 1 à 5, caractérisé en ce que, près de ou sur la surface (10) du substrat (4, 40) frappée par la lumière laser (20), on prévoit un cache (5) à trous qui n'est muni de parties évidées que dans la zone d'environnement immédiat des marques.

7. Dispositif selon l'une des revendications 1 à 6, caractérisé en ce que le substrat (4, 40) est une plaque transparente et en ce qu'il est muni, des deux côtés, d'un cache (5, 6) à trous.

8. Dispositif selon l'une des revendications 1 à 7, caractérisé en ce que le substrat (4, 40) est une plaque transparente et en ce qu'un détecteur (80, 82) de laser, faisant partie du dispositif récepteur photoélectrique, est fixé, directement ou avec interposition d'un filtre (83), sur la surface (7, 42) de la plaque située à l'opposé de la source laser.

9. Dispositif selon la revendication 7, caractérisé en ce que les caches (5, 6) à trous sont conformés de telle sorte que la lumière laser (24), qui n'a pas été déviée par les marques, peut traverser sensiblement sand obstacle la combinaison cache à trous-substrat-cache à trous.

10. Dispositif selon l'une des revendications 5 à 7, caractérisé en ce qu'il est constitué d'un corps ou boîtier (G) sensiblement fermé, le fond du boîtier (G) étant formé par l'élément absorbant (2) et le couvercle par l'écran (3) à trous, et en ce que le substrat (4, 40) est monté, parallèle et à une certaine distance entre le fond et le couvercle.

11. Dispositif selon l'une des revendications 1 à 10, caractérisé en ce que les marques (11, 110, 111, 112, 113, 212, 310, 311, 312, 313, 314) ont une conformation telle qu'elles dispersent la lumière laser.

12. Dispositif selon l'une des revendications 1 à 11, caractérisé en ce que le ou les détecteur(s) (8, 80, 81, 82, 84) de laser, faisant partie due dispositif récepteur photo-électrique, est ou sont disposé(s) de façon telle qu'ils ne reçoivent sensiblement que la lumière laser (21, 22) dispersée, réfractée, diffractée ou déviée d'une quelconque autre manière par les marques.

13. Dispositif selon l'une des revendications 1 à 12, caractérisé en ce que le récepteur photo-électrique comprend plusieurs détecteurs (8, 80, 81, 82, 84) de laser, qui sont disposés de façon telle qu'ils reçoivent dans leur ensemble, à partir de chaque marque, une quantité sensiblement égale de lumière.

14. Dispositif selon l'une des revendications 1 à 13, caractérisé en ce que les marques (11, 110, 111, 112, 113, 212, 310, 311, 312, 313, 314) ont des limites présentant des bords le plus vifs ou aigus possible et en ce qu'elles présentent dans une dimension, de préférence dans deux dimensions, une étendue plus importante que celle du rayon laser (20) qui frappe le substrat (4, 40) ou les marques qui se trouvent sur celui-ci.

15. Procédé pour l'ajustement fin d'un rayon laser focalisé, caractérisé en ce que l'on dispose, dans le plan focal, un substrat (4, 40) sensiblement transparent et/ou réfléchissant, sur lequel sont disposées des marques (11, 110, 111, 112, 113, 212, 310, 311, 312, 313, 314) non absorbantes, qui dévient par dispersion, par diffraction, par réfraction ou d'une quelconque autre manière, une partie de la lumière (20) incidente, et en ce que l'on fait frapper les marques par le rayon laser, la lumière (21, 22) ainsi déviée par les marques étant captée au moyen d'un détecteur (8, 80, 81, 82, 84) et les signaux produits par celui-ci étant exploités pour réaliser l'ajustement.

## Claims

1. An apparatus for the fine adjustment of a focussed laser beam, in particular for the calibration of the beam deflection geometry, characterised by
— a flat, substantially transparent and/or reflective substrate (4, 40) for placement in the focal plane of the laser beam (20),
— a plurality of marks (11, 110, 111, 112, 113, 212, 310, 311, 312, 313, 314) arranged on the substrate (4, 40) in the focal plane which scatter, refract, diffract or otherwise deflect the laser light, and
— a photoelectric device for the selective reception of the laser light (21, 22) scattered, diffracted, refracted or otherwise deflected by the marks, and for the conversion of said light into electric signals.

2. An apparatus according to Claim 1, characterised by an electronic evaluation device (9, 9a) for the electric signals which is connected to the photoelectric device.

3. An apparatus according to Claim 1, characterised in that the substrate (4, 40) is essentially transparent to the laser light (20) concerned, and that the photoelectric reception device is arranged on the side (7, 42) of the substrate which faces away from the laser source.

4. An apparatus according to one of Claims 1 to 3, characterised in that an aperture diaphragm (3) is provided on the laser source side, spaced apart from the substrate (4, 40), which diaphragm essentially blocks all of the laser light which is not incident on the immediate vicinity of the marks.

5. An apparatus according to one of Claims 1 to 4, characterised in that a beam sink (2, 51) for the laser light reflected or transmitted by the substrate (4, 40) is provided in the vicinity of the marks.

6. An apparatus according to one of Claims 1 to 5, characterised in that a perforated mask (5) which contains holes only in the direct vicinity of the marks is provided on or adjacent to the surface (10) of the substrate (4, 40) which is impacted by the laser light (20).

7. An apparatus according to one of Claims 1 to 6, characterised in that the substrate (4, 40) is a transparent plate and is provided on either side with a perforated mask (5, 6).

8. An apparatus according to one of Claims 1 to 7, characterised in that the substrate (4, 40) is a transparent plate, and that a laser detector (80, 82) of the photoelectric reception device is attached, directly or with the interposition of a filter (83), to the surface (7, 42) of the plate which faces away from the laser source.

9. An apparatus according to Claim 7, characterised in that the perforated masks (5, 6) are arranged so that laser light (24) which is not deflected by the marks can pass through the combination of perforated mask/substrate/perforated mask substantially unhindered.

10. An apparatus according to one of Claims 5 to 7, characterised in that it is designed as a substantially closed housing (G), the base of the housing (G) being formed by the absorber (2) and the lid by the aperture diaphragm (3), and the substrate (4, 40) being mounted in parallel spaced apart between the base and the lid.

11. An apparatus according to one of Claims 1 to 10, characterised in that the marks (11, 110, 111, 112, 113, 212, 310, 311, 312, 313, 314) are designed to scatter the laser light.

12. An apparatus according to one of Claims 1 to 11, characterised in that the laser detector or detectors (8, 80, 81, 82, 84) of the photoelectric reception device is or are so arranged that they substantially receive only the laser light (21, 22) scattered, refracted, diffracted or otherwise deflected by said marks.

13. An apparatus according to one of Claims 1 to 12, characterised in that the photoelectric reception device comprises a plurality of laser detectors (8, 80, 81, 82, 84) which are arranged so that they receive in total about the same amount of light from each mark.

14. An apparatus according to one of Claims 1 to 13, characterised in that the marks (11, 110, 111, 112, 113, 212, 310, 311, 312, 313, 314) have boundaries which are as abrupt as possible and have a greater expansion than the laser beam (20) incident on the substrate (4, 40) or the marks thereon in at least one and preferably in both dimensions.

15. A method for the fine adjustment of a focussed laser beam, characterised in that a substantially transparent and/or reflective substrate (4, 40) is arranged in the focal plane, on which substrate there are arranged non-absorbing marks (11, 110, 111, 112, 113, 212, 310, 311, 312, 313, 314) which deflect a portion of the incident light (20) by scattering, diffracting, refracting or otherwise deflecting, and that the marks are impacted with the laser beam and the light (21, 22) which is thereby deflected by the marks is received by means of a detector (8, 80, 81, 82, 84) and the signals generated therefrom are evaluated for adjustment.

Fig. 1

Fig. 2

*Fig. 3*

*Fig. 4*

Fig. 5a

Fig. 5b

Fig. 5c

Fig. 6a

Fig. 6b

Fig. 6c

Fig. 7a

Fig. 7b

Fig. 7c

EP 0 215 734 B1

**Fig. 8a**

40 20 110 41 81

**Fig. 8b**

40 20 110 82 42

**Fig. 8c**

40 20 84 110

**Fig. 8d**

40 20 110 83 82 42

**Fig. 9a**

40 20 110 24 80 2

**Fig. 9b**

40 20 110 24 80 50 51

*Fig. 10 a*

20

40

210

80

*Fig. 11 a*

40

80

20

211

80

211

40

25

210

80

40

25

212

*Fig. 10 b*

*Fig. 11 b*

80

40

211

*Fig. 11c*

40

80

*Fig. 12*

213

212

212

**Fig. 13a**

**Fig. 13b**

**Fig. 13c**

**Fig. 13d**

**Fig. 13e**

**Fig. 13f**